# EUROPEAN PATENT SPECIFICATION

(11) **EP 3 173 135 B1**
(45) Date of publication and mention of the grant of the patent: **25.07.2018**
(21) Application number: 16196709.6
(22) Date of filing: 01.11.2016
(51) Int. Cl.: B01D 19/00

(54) **METHOD AND APPARATUS FOR DEGASSING A LIQUID REGARDING NON DESIRED COMPOUNDS**
VERFAHREN UND VORRICHTUNG ZUR ENTGASUNG EINER FLÜSSIGKEIT HINSICHTLICH UNERWÜNSCHTER VERBINDUNGEN
PROCÉDÉ ET DISPOSITIF DE DÉGAZAGE D'UN LIQUIDE CONCERNANT DES COMPOSANTS NON DÉSIRÉS

(30) Priority: 26.11.2015 SE 1551535
(43) Date of publication of application: 31.05.2017
(73) Proprietor: TTM Energiprodukter AB, 391 27 Kalmar (SE)
(72) Inventor: ILLERSTAM, Per-Olof, 386 31 Färjestaden (SE)
(74) Representative: Noréns Patentbyrå AB

(56) References cited:
- US-A- 4 054 522
- US-A- 4 602 923
- US-A1- 2014 202 545
- US-A1- 2015 096 441

## Description

The liquid system, or the fluid system, can be closed or open. Below, the term liquid is used.

To an increasing degree, in energy wells, such as for geothermal heating, and energy storages, as well as in indirectly cooled technical systems such as freeze stores, ice rinks, etc., compounds are added to prevent freezing in the pipes.

The present invention is not limited to any particular field of use, but can be used in any liquid system. Examples of fields in which liquid systems are used, that must be degassed, include the shipping industry, the mining industry, plumbing, hydraulics, beer and wine manufacturing, and so on.

It is common to use plastic pipes for transporting the liquid in the systems. Plastic pipes are not diffusion tight, but gases such as oxygen, nitrogen and carbon dioxide, and also other gases, can diffuse from the environment and into the liquid in the systems.

Also in systems using metal piping, gases diffuse from the environment into the systems.

Also when using metal pipes, leaking in takes place via joints in the systems.

Leaking in of gas can also take place from a gas-filled equipment connected to the liquid system. Such equipment can be cooling machines.

A large problem with heating and cooling systems comprising an energy carrying liquid is corrosion in the systems. Moreover, compounds, mainly as oxygen, nitrogen, carbon dioxide, hydrogen and noble gases, bring with them energy efficiency deterioration, in that they act isolatingly and enter pumps thus lowering the efficiency of such pumps. Apart from the said compounds there may also be other compounds that are desired to have evacuated, such as hydrogen sulphide or cooling medium gas.

Different types of corrosion occur in such systems, such as general corrosion, galvanic corrosion, erosion corrosion, crevice corrosion, microbiologically induced corrosion and local pit corrosion.

The water quality is of great importance for the corrosion process. Primarily, the corrosion depends, inter alia, upon the amount of dissolved compounds, gases dissolved in the liquid, the pH value, the temperature, etc. One parameter which is very important is the concentration of dissolved oxygen in the liquid, since oxygen is necessary for an oxidation process.

An important condition is the concentration of oxygen, different hydrogen compounds and carbonic acid that are dissolved in the liquid, since aggressive gases are necessary for an oxidation process and galvanic currents to occur.

A liquid which contains gases changes its physical and/or chemical properties. Therefore, the liquid must be degassed for it to maintain its physical and/or chemical properties.

For closed water systems, which today are the most common ones, gases precipitating from the liquid, such as air, will occur as bubbles at high points in the system.

The ability of water to dissolve air depends upon temperature, pressure and salinity. Water dissolves more gas at higher pressures and lower temperatures.

The consumed oxygen during oxidation within the system is replaced by oxygen from the environment leaking into the system to achieve equilibrium with respect to oxygen in the system.

Therefore, systems need to be degassed to lower the oxygen rates in the system.

Morover, nitrogen and carbon dioxide need to be removed from the systems, because of the negative effects of these compounds on heat exchangers and pumps.

In order to remove harmful gases, such as oxygen, nitrogen and carbon dioxide, the liquid mixture can be subjected to an underpressure, whereupon the gases are removed. Such a lowering of the boiling point, however, results in that the additives for a lowering of the freezing point are driven out from the liquid mixture.

It is also desirable to remove radon from the system. Documents US 2014/202545, US 4 054 522 and US 4 602 923 disclose a device for degassing a liquid system regarding non desired compounds. The present invention solves the problem of degassing, in a simple manner, the liquid in an open or a closed system.

Hence, the present invention relates to a method for degassing a closed liquid system regarding non desired compounds, such as oxygen or oxygen-containing compounds, or nitrogen or carbon dioxide or hydrogen or sulphur compounds, as set up in claim 1. Moreover, the invention relates to a device of the type and main features as described in claim 8.

Below, the invention is described in closer detail, partly in connection to an exemplifying embodiment illustrated in the enclosed drawings, wherein
- Figures 1, 2 and 4 show three different operational modes for a first embodiment of the invention
- Figures 4, 5 and 6 show three different operational modes for a second embodiment of the invention
- Figure 7 shows a third embodiment of the invention.

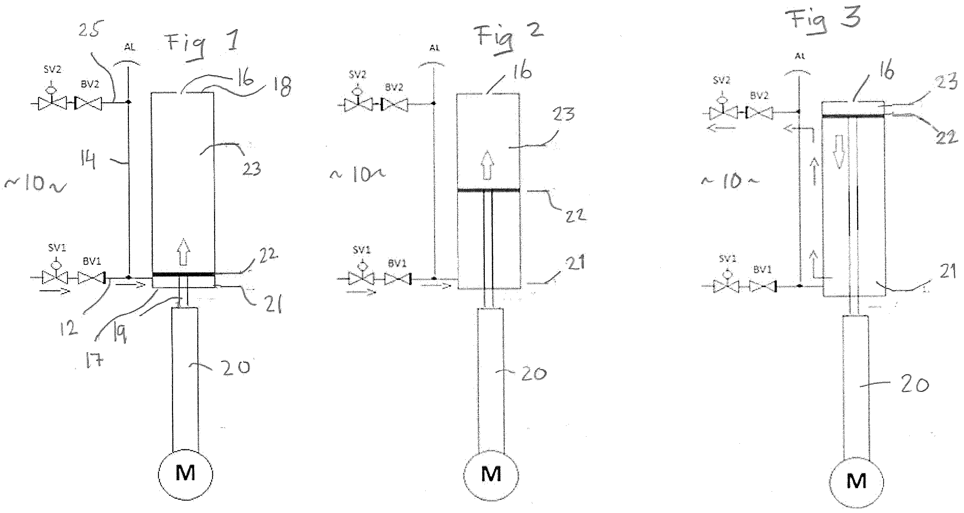

In Figures 1, 2 and 3, SV1 and SV2 denote control valves, being constituted by an active or inactive flow limitation, in other words a constriction. BV1 and BV2 denote check valves, and AL denotes an air releasing valve.

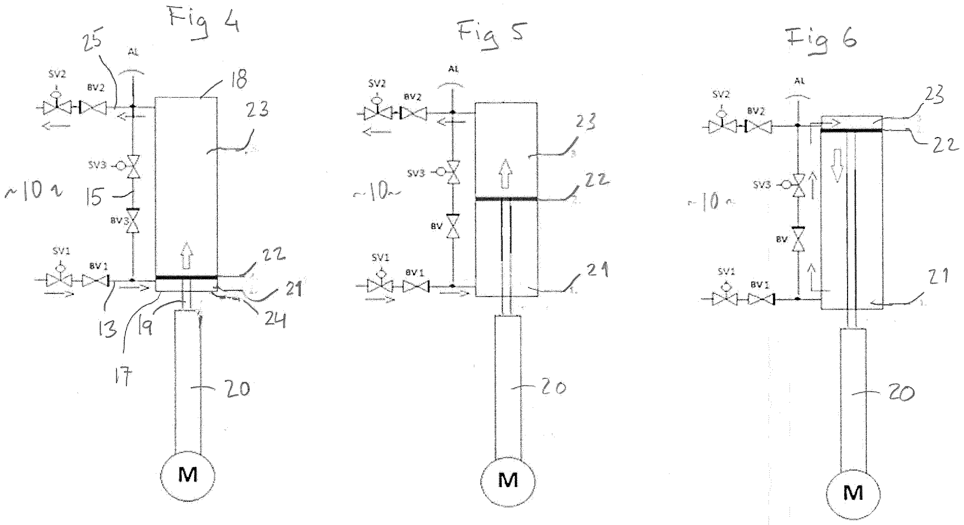

In Figures 4, 5 and 6, SV1, SV2 and SV3 denote the said control valves, BV1, BV2 and BV3 denote check valves and AL denotes an air releasing valve.

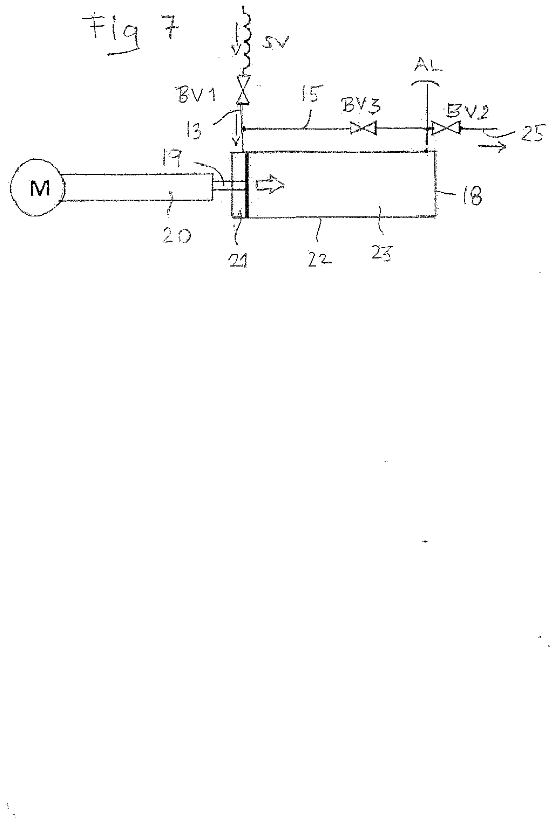

In Figure 7, SV denotes a constriction.

The present invention intends to degas a closed liquid system in terms of non desired compounds, such as oxygen or oxygen containing compounds, or nitrogen or carbon dioxide or hydrogen or sulphur compounds.

According to the invention, liquid from the main circuit, or a sub circuit, of the system 10 is caused to be led to an elongated chamber. Hence, the chamber can be arranged on a main conduit of the system or be arranged on a parallel side conduit to the main conduit.

The chamber has a constant cross-section, and a tightly sealing wall 22, which is movable along the chamber and divides the chamber into a lower 21 and an upper 23 chamber part.

The liquid in the system 10 is caused to be led to the lower chamber part 21 by the tightly sealing wall 22 being caused to move upwards and thereby suck the liquid from the system to the lower part chamber via a constriction, whereby an underpressure is caused to be created in the lower chamber part 21.

According to an embodiment, the constriction is caused to be constituted by a throttle valve (SV1), which is controllable. This embodiment is also shown in the Figures 1-6.

The underpressure is caused to be sufficiently low so that one or several dissolved compounds in the liquid leave the liquid and are evaporated, that is released into gas phase.

The skilled person has no problem selecting an underpressure which results in that one or more compounds that are dissolved in the liquid are released into gas phase.

After the tightly sealing wall 22 has moved to an upper end of the upper chamber part 23, the tightly sealing wall is caused to move downwards and thereby bring the liquid and gases to be restored into the system via a third conduit 25, while gas is caused to depart to the environment via a deairing valve AL, whereupon the described cycle is repeated.

The liquid in the system 11 is caused to be supplied to the lower chamber 21 via a first conduit 12; 13, provided with the said throttle valve SV1 and a check valve BV1. The liquid and gases are caused to be restored to the system 10 via a second conduit 14; 15 to which the deairing valve AL is connected.

According to a first embodiment, only the lower chamber part 21 is closed, as is illustrated in Figures 1, 2 and 3. The upper 23 chamber part is open to the environment via an opening 16.

In Figure 1, the operational mode 1 is shown. The tightly sealing wall 22 is in its lower-most position at the bottom 17 of the lower chamber part 21.

The tightly sealing wall 22 moves, by a mechanical force, towards an upper end 18 of the upper chamber part 23. In connection hereto, an underpressure arises in the lower chamber part 21, because the liquid from the system 10 passes the throttle valve SV1. The underpressure results in that certain dissolved compounds in the liquid are released into gas phase.

In Figures 1-6, the thick arrows show the direction of movement for the tightly sealing wall. The thin arrows show the flow direction of the liquid.

The drive device for the tightly sealing wall 22 comprises a bar 19 which is movable in relation to a housing 20. The arrangement may comprise a ball bar or any other linear actuator driven by a motor denoted M.

In Figure 2, the operational mode 2 is illustrated. The tightly sealing wall 22 moves upwards.

In Figure 3, the operational mode 3 is illustrated. The tightly sealing wall 22 move downwards, whereby the liquid in the lower part chamber 21 is pressed back to the system via the check valve BV2 and the throttle valve SV2. The freed gas departs through the air releasing valve AL. The air releasing valve can be of any suitable type, such as of floater type.

Thereafter, the described work cycle is repeated.

According to a second embodiment, both the lower end 1 of the chamber and the upper end 3 are closed.

In Figure 4, the start position, operational mode 1, is shown. The tightly sealing wall 22 moves upwards from the bottom 24 of the lower chamber part 21. Liquid is sucked from the system 10 into the lower chamber part via the throttle valve SV1 And the check valve BV1. An underpressure is created in the lower chamber part, and certain compounds dissolved in the liquid are released into gas phase. When the tightly sealing wall 22 for the first time moves upwards, air is pressed out from the upper chamber part 23 and depart, via a deairing valve AL which is connected to the upper chamber part 23. In case a work cycle has been performed already and the tightly sealing wall 22 moves upwards, liquid in the upper chamber part 23 is pressed out from the chamber part 23 and via the check valve BV2 and the throttle valve SV2 back to the system via a third conduit 25. Any released gas departs via the deairing valve AL.

In Figure 5, the operational mode 2 is illustrated. The tightly sealing wall 22 is displaced upwards. Since liquid flows into the lower chamber part and the corresponding liquid amount flows out from the upper chamber and into the system 10 via the check valve BV2 and the throttle valve SV2, the pressure in the system will remain substantially constant. This is not the case when the upper chamber part is open, see Figure 1.

In Figure 6, the operational mode 3 is illustrated. The tightly sealing wall 22 is displaced downwards to its start position, see Figure 1. When the tightly sealing wall 22 moves downwards, liquid and freed gas are pressed from the lower chamber part 1 through a check valve BV3 and a throttle valve SV3, and are sucked into the upper chamber part 23. Since the throttle valve SV3 is constricted, an underpressure is created in the upper chamber part, whereby certain dissolved compounds are transitioned into gas phase. Freed gas in the lower chamber part departs via the deairing valve.

Thereafter, the described work cycle is repeated.

According to a preferred embodiment, the said throttle valve SV1 which is arranged between the system and the inlet of the chamber, is caused to be controlled by the pressure in the system and the magnitude of the underpressure on the other side of the throttle valve, and the throttle valve never completely closes the flow of liquid.

According to a third embodiment shown in Figure 7, the said constriction is caused to be constituted by a capillary tube SV.

The replacement of the throttle valve SV1 with a capillary tube results in the deairing device not being sensitive for different pressurizations in the system. Then, the user does not have to perform an adjustment at the installation, which is necessary for the use of a controlled throttle valve.

A capillary tube functions as a flow limiter, but does not require adjustment and maintenance. The length of the capillary tube is adjusted to the size of the degassing device.

Also the throttle valve SV3 can be avoided in the embodiments according to Figures 4-7.

The task of the throttle valve SV3 is to maintain the underpressure from the chamber part 21 when the liquid flows to the chamber part 23. The removal of the throttle valve SV3 results in that the underpressure in chamber part 23 becomes slightly lower, but this is only of marginal importance since gases cannot return to the liquid at an underpressure.

Also the throttle valve SV2 can be omitted. The task of the throttle valve SV2 is to somewhat prevent the liquid, when it is pressed back to the system from the chamber part 23, so that the system pressure does not increase. This is valid in the embodiments according to Figures 4-7.

The removal of the throttle valve SV2 results in that the system pressure increases, but only marginally.

Above, a number of embodiments have been described. However, the invention may be varied regarding the operation of the tightly sealing wall, the positioning of the deairing valve, the choice of control valves on the conduits 14, 15 and 23.

## Claims

1. Method for degassing an open or closed liquid system (10) regarding non desired compounds, such as oxygen or oxygen-containing compounds, or nitrogen or carbon dioxide or hydrogen or sulphur compounds, wherein liquid from a main circuit of the system (10) or a sub circuit of the system is caused to be led to an elongated chamber (21,23), wherein the chamber has a constant cross-section and a tightly sealing wall (22) which is movable along the chamber (21,23), dividing the chamber in a lower (21) and an upper (23) chamber part, wherein the liquid is caused to be led to the lower chamber part (21) by the tightly sealing wall (22) being caused to move upwards and thereby sucking in liquid from the system (10) to the lower chamber part (21) via a constriction (SV;SV1), whereby an underpressure in the lower chamber part (21) is caused to be created, wherein the underpressure is caused to be sufficiently low so that dissolved compounds leave the liquid and are released into gas phase, and in that the tightly sealing wall (22) thereafter is caused to move downwards and as a result cause the liquid and gases to be restored to the system (10) while gas is caused to depart to the environment via a deairing valve (AL), wherein the liquid is caused to be supplied to the lower chamber part (21) via a first conduit (12) arranged with the said constriction (SV;SV1) and a check valve (BV1), and wherein the liquid and gases are caused to be restored to the system (10) via a second conduit (14;15) to which the deairing valve (AL) is connected, and wherein the described cycle is repeated.

2. Method according to claim 1, wherein
the said constriction is caused to be constituted by a throttle valve (SV1).

3. Method according to claim 1, wherein the said constriction is caused to be constituted by a capillary tube (SV).

4. Method according to claim 1, 2, or 3, wherein only the lower part (21) of the chamber is closed.

5. Method according to claim 1, 2, or 3, wherein both the lower part (21) of the chamber and the upper part (23) of the chamber are closed.

6. Method according to claim 3, wherein in a work cycle, the tightly sealing wall (22) is caused to, in a starting position, be arranged at a bottom (17) of the lower chamber part (21) and therein, in the start position, the upper chamber part (23) is filled with liquid, in that the tightly sealing wall (22) is caused to move from the bottom of the lower chamber part (21) and upwards, to an upper end (18) upper chamber part (23), wherein liquid thereby is caused to flow from the system (10) via a first conduit (12;13) with the said constriction (SV;SV1), to the lower chamber part (21), whereby an underpressure is caused to be created in the lower chamber part (21), wherein the underpressure is caused to be created in the lower chamber part (21), wherein the underpressure is caused to be sufficiently low for dissolved compounds to leave the liquid and be released into gas phase, in that, when the tightly sealing wall (22) moves upwards, liquid in the upper chamber part (23) is caused to be restored to the system (10) via a third conduit wherein the tightly sealing wall (22) is caused to again move downwards to the bottom (17) of the lower chamber part, whereby liquid and gas in the lower chamber part (21) are caused to flow, via the second conduit (15) from the lower chamber part (21) into the upper chamber part (23), whereby gas is caused to depart through the deairing valve (Al), which is connected to the second conduit (15), wherein the tightly sealing wall (22) is again caused to move from the bottom (17) of the lower chamber part towards the upper end (18) of the upper chamber part, whereby the said underpressure is caused to be created in the lower chamber part (21), and wherein the said work cycle is repeated.

7. Method according to claim 1, 2, 4, 5, or 6, wherein the said throttle valve (SV1) arranged between the system and the inlet of the lower chamber part (21) is caused to be controlled using the pressure in the system and the magnitude of the underpressure on the other side of the throttle valve (SV1), and wherein the throttle valve is never caused to completely close the flow of liquid.

8. Device for degassing a closed liquid system regarding non desired compounds, such as oxygen or oxygen-containing compounds, or nitrogen or carbon dioxide or hydrogen or sulphur compounds, wherein a first conduit (12;13) is arranged to lead liquid from a main circuit of the system (10) or a sub circuit of the system to an elongated chamber (21,23), wherein in the chamber has a constant cross-section and a tightly sealing wall (22) which is movable along the chamber (21,23), dividing the chamber in a lower (21) and an upper (23) chamber part, wherein the said conduit (12,13) is connected to the lower chamber part (21), wherein the tightly sealing wall (22) is movable in an upwards direction and in a downwards direction in the chamber (21,23), wherein
the device is arranged to suck in liquid from the system (10) to the lower chamber part (21) via a constriction (SV;SV1) when the tightly sealing wall (22) moves upwards,
whereby an underpressure in the lower chamber part (21) is created, wherein a second conduit (14;15) is arranged to be connected between the lower chamber part (21) and the system (10), arranged to, using a check valve (BV1) in the first conduit (12;13), restore the liquid and gases from the lower chamber part (21) when the tightly sealing wall (22) is displaced downwards, and wherein a deairing valve (AL) is connected to the said second conduit (14;15), by which gas is caused to depart to the environment.

9. Device according to claim 8, wherein only the lower part (21) of the chamber is closed.

10. Device according to claim 8, wherein both the lower part (21) and the upper part (23) of the chamber are closed.

11. Device according to claim 8, 9 or 10, wherein the said constriction is constituted by a throttle valve (SV1).

12. Device according to claim 8, 9, 10 or 11, wherein the said constriction is constituted by a capillary tube (SV).

## Patentansprüche

1. Verfahren zum Entgasen eines offenen oder geschlossenen Flüssigkeitssystems (10) betreffend unerwünschte Komponenten, wie zum Beispiel Sauerstoff oder Sauerstoff enthaltende Komponenten oder Stickstoff oder Kohlendioxid oder Wassersoff oder Schwefelkomponenten, wobei Flüssigkeit von einem Hauptkreislauf des Systems (10) oder einem Unterkreislauf des Systems veranlasst wird, um in eine längliche Kammer (21, 23) geführt zu werden, wobei die Kammer einen konstanten Querschnitt und eine dicht abdichtende Wand (22) aufweist, welche entlang der Kammer (21, 23) bewegbar ist, welche die Kammer in einen unteren (21) und einen oberen (23) Kammerteil aufteilt, wobei die Flüssigkeit durch die dicht abdichtende Wand (22) veranlasst wird, in den unteren Kammerteil (21) geführt zu werden, welche veranlasst wird, sich nach oben zu bewegen und hierdurch Flüssigkeit von dem System (10) zu dem unteren Kammerteil (21) über eine Einschnürung (SV; SV1) einzusaugen, wodurch veranlasst wird, dass in dem unteren Kammerteil (21) ein Unterdruck geschaffen wird, wobei der Unterdruck veranlasst wird, ausreichend niedrig zu sein, so dass gelöste Komponenten die Flüssigkeit verlassen und in der Gasphase entlassen werden, und dass die dicht abdichtende Wand (22) danach veranlasst wird, sich nach unten zu bewegen und als Ergebnis veranlasst, dass die Flüssigkeit und Gase zu dem System (10) rückgespeichert werden, während Gas veranlasst wird, über ein Entlüftungsventil (AL) an die Umgebung zu entweichen, wobei die Flüssigkeit veranlasst wird, über eine erste Leitung (12), welche in der Einschnürung (SV; SV1) angeordnet ist und ein Steuerventil (BV1) zu dem unteren Kammerteil (21) gespeist zu werden, und wobei die Flüssigkeit und Gase veranlasst werden, über eine zweite Leitung (14, 15) zu dem System zurückgespeist zu werden, mit welcher das Entlüftungsventil (AL) verbunden ist, und wobei der beschriebene Zyklus wiederholt wird.

2. Verfahren nach Anspruch 1, bei welchem die Einschnürung veranlasst wird, durch ein Drosselventil (SV1) gebildet zu werden.

3. Verfahren nach Anspruch 1, bei welchem die Einschnürung veranlasst wird, durch ein Kapillarröhrchen (SV) gebildet zu werden.

4. Verfahren nach Anspruch 1, 2 oder 3, wobei nur der untere Teil (21) der Kammer geschlossen ist.

5. Verfahren nach Anspruch 1, 2 oder 3, wobei beide, der untere Teil (21) der Kammer und der obere Teil (23) der Kammer geschlossen sind.

6. Verfahren nach Anspruch 3, wobei in einem Arbeitszyklus die dicht abdichtende Wand (22) veranlasst wird, in einer Startposition an einem Boden (17) des unteren Kammerteils (21) angeordnet zu sein und dort, in der Startposition, der obere Kammerteil (23) mit Flüssigkeit gefüllt wird, dass die dicht abdichtende Wand (22) veranlasst wird, sich von dem Boden des unteren Kammerteils (21) zu bewegen und nach oben, zu einem oberen Ende (18) des oberen Kammerteils (23) sich zu bewegen, wobei Flüssigkeit hierdurch veranlasst wird, von dem System (10) über eine erste Leitung (12; 13) mit Hilfe der Einschnürung (SV; SV1) zu dem unteren Kammerteil (21) zu fließen, wodurch veranlasst wird, dass in dem unteren Kammerteil (21) ein Unterdruck gebildet wird, wobei der Unterdruck in dem unteren Kammerteil (21) gebildet wird, wobei der Unterdruck veranlasst wird, ausreichend niedrig zu sein, damit gelöste Komponenten die Flüssigkeit verlassen und in Gasphase entlassen werden, dass, wenn die dicht abdichtende Wand (22) sich nach oben bewegt, Flüssigkeit in dem oberen Kammerteil (23) veranlasst wird, zu dem System (10) über eine dritte Leitung (25) zurückgespeist zu werden, wobei die dicht abdichtende Wand (22) veranlasst wird, sich wieder nach unten zu dem Boden (17) des unteren Kammerteils zu bewegen, wodurch Flüssigkeit und Gas in dem unteren Kammerteil (21) veranlasst werden, über die zweite Leitung (15) von dem unteren Kammerteil (21) in den oberen Kammerteil (23) zu fließen, wodurch Gas veranlasst wird, durch das Entlüftungsventil (Al) zu entweichen, welches mit der zweiten Leitung (15) verbunden ist, wobei die dicht abdichtende Wand (22) wieder veranlasst wird, sich von dem Boden (17) des unteren Kammerteils zu dem oberen Ende (18) des oberen Kammerteils zu bewegen, wodurch der genannte Unterdruck veranlasst wird, in dem unteren Kammerteil (21) gebildet zu werden, und wobei der genannte Arbeitszyklus wiederholt wird.

7. Verfahren nach Anspruch 1, 2, 4, 5 oder 6, wobei das genannte Drosselventil (SV1), welches zwischen dem System und dem Einlass des unteren Kammerteils (21) angeordnet ist, veranlasst wird, geregelt zu werden, unter Verwendung des Drucks in dem System und der Größe des Unterdrucks auf der anderen Seite des Drosselventils (SV1), und wobei das Drosselventil niemals veranlasst wird, den Strom der Flüssigkeit vollständig abzuschließen.

8. Vorrichtung zum Entgasen eines geschlossenen Flüssigkeitssystems, betreffend nicht erwünschte Komponenten wie Sauerstoff oder Sauerstoff enthaltende Komponenten oder Stickstoff oder Kohlendioxid oder Wasserstoff oder Schwefelkomponenten, wobei eine erste Leitung (12; 13) angeordnet ist, um Flüssigkeit vom einem Hauptkreislauf des Systems (10) oder einem Unterkreislauf des Systems zu einer länglichen Kammer (21, 23) zu führen wobei die Kammer einen konstanten Querschnitt und eine dicht abdichtende Wand (22) hat, welche entlang der Kammer (21, 23) bewegbar ist, wobei sie die Kammer in einen unteren (21) und einen oberen (23) Kammerteil teilt, wobei die genannte Leitung (12, 13) mit dem unteren Kammerteil (21) verbunden ist, wobei die dicht abdichtende Wand (22) in einer nach oben gerichteten Richtung und in einer nach unten gerichteten Richtung in der Kammer (21, 23) bewegbar ist, wobei die Vorrichtung angeordnet ist, um eine Flüssigkeit von dem System (10) in den unteren Kammerteil (21) über eine Einschnürung (SV; SV1) einzusaugen, wenn sich die dicht abdichtende Wand (22) nach oben bewegt, wodurch in dem unteren Kammerteil (21) ein Unterdruck geschaffen wird, wobei eine zweite Leitung (14; 15) angeordnet ist, um zwischen dem unteren Kammerteil (21) und dem System (10) verbunden zu werden, angeordnet, um unter Verwendung eines Absperrventils (BV1) in der ersten Leitung (12, 13) die Flüssigkeit und Gase von dem unteren Kammerteil (21) zurückzuspeichern, wenn die dicht abdichtende Wand (22) nach unten verschoben wird, und wobei ein Entlüftungsventil (Al) mit der zweiten Leitung (14; 15) verbunden ist, wodurch Gas veranlasst wird, an die Umgebung zu entweichen.

9. Vorrichtung nach Anspruch 8, wobei nur der untere Teil (21) der Kammer geschlossen ist.

10. Vorrichtung nach Anspruch 8, wobei der untere Teil (21) und der obere Teil (23) der Kammer geschlossen sind.

11. Vorrichtung nach Anspruch 8, 9 oder 10, wobei die Einschnürung durch ein Drosselventil (SV1) dargestellt ist.

12. Vorrichtung nach Anspruch 8, 9, 10 oder 11, die wobei die Einschnürung durch ein Kapillarröhrchen (SV) gebildet wird.

## Revendications

1. Procédé permettant de dégazer un système liquide ouvert ou fermé (10) pour éliminer des composés indésirables tels que de l'oxygène ou des composés renfermant de l'oxygène ou de l'azote ou du dioxyde de carbone ou de l'hydrogène ou des composés soufrés, selon lequel :
du liquide provenant d'un circuit principal du système (10) ou d'un sous-circuit de ce systèmes et transféré dans une chambre allongée (21, 23),
cette chambre ayant une section transversale constante et une paroi de fermeture étanche (22) qui peut être déplacée le long de la chambre (21, 23) en la subdivisant en une partie de chambre inférieure (21) et une partie de chambre supérieure (23),
le liquide étant transféré dans la partie de chambre inférieure (21) par la paroi de fermeture étanche (22) se déplaçant vers le haut et aspirant ainsi du liquide provenant du système (10) vers la partie de chambre inférieure (21) par un resserrement (SV ; SV1), une dépression dans la partie de chambre inférieure (21) étant ainsi créée, la dépression étant suffisamment basse pour que des composés dissouts puissent quitter le liquide et être libérés dans la phase gazeuse, et la paroi de fermeture étanche (22) se déplaçant ensuite vers le bas pour entraîner ainsi le retour du liquide et de gaz vers le système (10) alors que du bas gaz s'échappe vers l'environnement par une soupape de désaération (AL),
le liquide étant fourni vers la partie de chambre inférieure (21) par une première conduite (12) équipée du resserrement (SV, SV1) et d'une soupape antiretour (BV1), et
le liquide et des gaz retournant dans le système (10) par une seconde conduite (14, 15) sur laquelle la soupape antiretour (AL) est branchée, le cycle décrit étant répété.

2. Procédé conforme à la revendication 1,
selon lequel le resserrement est provoqué par une soupape d'étranglement (SV1).

3. Procédé conforme à la revendication 1,
selon lequel le resserrement est constitué par un tube capillaire (SV).

4. Procédé conforme à la revendication 1, 2 ou 3,
selon lequel seule la partie inférieure (21) de la chambre est fermé.

5. Procédé conforme à la revendication 1, 2 ou 3,
selon lequel la partie inférieure (21) de la chambre et la partie supérieure (23) de la chambre sont toutes deux fermées.

6. Procédé conforme à la revendication 3,
selon lequel lors d'un cycle de travail dans la position de départ la paroi de fermeture étanche (22) est, située au fond (17) de la partie de chambre inférieure (21), et, la partie de chambre supérieure (23) est remplie de liquide,
la paroi de fermeture étanche (22) se déplace à partir du fond de la partie de chambre inférieure (21) vers le haut en direction de l'extrémité supérieure (18) de la partie de chambre supérieure (23), du liquide circulant ainsi à partir du système (10) par une première conduite (12, 13) équipée du resserrement (SV, SV1) vers la partie de chambre inférieure (21), une dépression étant créée dans la partie de chambre inférieure (21),
la dépression étant suffisamment basse pour permettre à des composés dissouts de quitter le liquide et d'être libérés dans la phase gazeuse, lorsque la paroi de fermeture étanche (22) se déplace vers le haut, du liquide situé dans la partie de chambre supérieure (23) étant retourné vers le système (10) par une troisième conduite (25),
la paroi de fermeture étanche (22) se déplaçant à nouveau vers le bas vers le fond (17) de la partie de chambre inférieure de sorte que du liquide et du gaz renfermés dans la partie de chambre inférieure (21) circule par la seconde conduite (15) de la partie de chambre inférieure (21) dans la partie de chambre supérieure (23),
du gaz s'échappant ainsi au travers de la soupape de désaération (A1) qui est branchée sur la seconde conduite (15),
la paroi de fermeture étanche (22) se déplaçant à nouveau du fond (17) de la partie de chambre inférieure vers l'extrémité supérieure (18) de la partie de chambre supérieure, de sorte qu'une dépression soit créée dans la partie de chambre inférieure (21), et le cycle de travail étant répété.

7. Procédé conforme à la revendication 1, 2, 4, 5 ou 6,
selon lequel
la soupape d'étranglement (SV1) montée entre le système et l'entrée de la partie de chambre inférieure (21) est commandée en utilisant la pression dans le système et la valeur de la dépression de l'autre côté de cette soupape d'étranglement (SV1), et
la soupape d'étranglement ne ferme jamais totalement la circulation de liquide.

8. Dispositif permettant de dégazer un système liquide fermé pour diminuer des composés indésirables tels que de l'oxygène ou des composés renfermant de l'oxygène ou de l'azote ou du dioxyde de carbone ou de l'hydrogène ou des composés soufrés, dans lequel :
une première conduite (12, 13) est réalisée pour transférer du liquide d'un circuit principal du système (10) ou d'un sous-circuit du système vers une chambre allongée (21, 23),
la chambre a une section transversale constante et une paroi de fermeture étanche (22) qui peut être déplacée le long de la chambre (21, 23) en la subdivisant en une partie de chambre inférieure (21) et une partie de chambre supérieure (23),
la conduite (12, 13) est reliée à la partie de chambre inférieure (21),
la paroi de fermeture étanche (22) peut être déplacée vers le haut et vers le bas dans la chambre (21, 23),
le dispositif peut aspirer du liquide du système (10) vers la partie de chambre inférieure (21) par un resserrement (SV ; SV1) lorsque la paroi de fermeture étanche (22) se déplace vers le haut,
une dépression est créée dans la partie de chambre inférieure (21),
une seconde conduite (14 ; 15) est branchée entre la première partie de chambre (21) et le système (10), pour, en utilisant une soupape de antiretour (BV1) branchée sur la première conduite (12, 13) retourner du liquide et des gaz de la partie de chambre inférieure (21) lorsque la paroi de fermeture étanche (22) est déplacée vers le bas, et
une soupape de désaération (AL) branchée sur la seconde conduite (14, 15) permet de libérer du gaz vers l'environnement.

9. Dispositif conforme à la revendication 8, dans lequel seule la partie de chambre inférieure (21) est fermée.

10. Dispositif conforme à la revendication 8, dans lequel la partie inférieure (21) de la chambre et la partie supérieure de la chambre (23) sont toutes deux fermées.

11. Dispositif conforme à la revendication 8, 9 ou 10, dans lequel le resserrement est constitué par une soupape d'étranglement (SV1).

12. Dispositif conforme à la revendication 8, 9, 10 ou 11, dans lequel le resserrement est constitué par un tube capillaire (SV).
